# EUROPÄISCHE PATENTSCHRIFT

(11) **EP 1 174 244 B1**
(45) Veröffentlichungstag und Bekanntmachung des Hinweises auf die Patenterteilung: **26.05.2004**
(21) Anmeldenummer: 01117006.5
(22) Anmeldetag: 12.07.2001
(51) Int. Cl.: B29C 47/08, B29C 47/68

(54) **Vorrichtung zur Abdichtung einer Lochscheibe in einer Extrusionsanlage**
Sealing device for breaker plate in an extruder
Dispositif d'étanchéité pour plaque à orifices dans une extrudeuse

(30) Priorität: 16.07.2000 DE 10034654; 24.01.2001 DE 10103005
(43) Veröffentlichungstag der Anmeldung: 23.01.2002
(73) Patentinhaber: Paul Troester Maschinenfabrik, D-30519 Hannover (DE)
(72) Erfinder: Reineke, Frank, 30519 Hannover (DE)
(74) Vertreter: Junius, Walther, Dr.

(56) Entgegenhaltungen:
- EP-A- 0 855 262
- EP-A- 0 990 504
- US-A- 3 632 279
- US-A- 3 653 419
- US-A- 3 833 247

## Beschreibung

Die Erfindung betrifft eine Vorrichtung zur Abdichtung einer Lochscheibe in einer Extrusionsanlage für Kautschukmischungen oder Kunststoffe, bestehend aus einem zumindest zweiteiligen, an den Ausgang der Extrusionsanlage angebauten Gehäuse, in welchem die Lochscheibe axial gegen einen ringförmigen Absatz gepresst ist, an ihrem äußeren Umfang mit einem Absatz in Form einer Schrägfläche versehen ist und an ihrem Umfang mittels eines Dichtringes abgedichtet gelagert ist, wobei Mittel zum Anpressen des Dichtringes an die Schrägfläche der Lochscheibe vorgesehen sind, und wobei die eine auf die Schrägfläche an der Lochscheibe gerichtete Stirnseite des Dichtringes ebenfalls als Schrägfläche mit einem ähnlichen oder gleichen Neigungswinkel und gleicher Neigungsrichtung wie die Schrägfläche an der Lochscheibe ausgebildet ist.

Eine Vorrichtung vergleichbarer Art ist beispielsweise aus der US-A-3 632 279 bekannt.

Lochscheiben werden als Strainer, Träger von Sieben und als Ausformwerkzeuge in der Extrusionstechnik eingesetzt. Sie werden hinter einem Schneckenextruder oder einer Zahnradpumpe angeordnet. Solche Lochplatten stellen meist einen hohen Strömungswiderstand dar und bewirken dadurch vor dem Ort ihrer Anordnung einen hohen Druckaufbau.

Dieser hier vor der Lochplatte aufgebaute hohe Druck macht besondere Maßnahmen zur Abdichtung erforderlich, damit nicht Extrudat unter diesem hohen Druck durch feinste, zwischen den Maschinenteilen beim Zusammenbau verbliebenen Spalten entweicht. Die bisher verwendeten Abdichtungssysteme sind kompliziert und aufwendig. Ihr Ein- und Ausbau ist mit erheblichem Zeitaufwand verbunden. Da Lochscheiben mit jedem Mischungswechsel und manchmal auch zwischen Mischungswechseln zum Zwecke der Reinigung ausgebaut werden müssen, hängt die für den

Ein- und Ausbau der Lochplatte benötigte Zeit weitgehend von dem verwendeten Abdichtsystem ab. Da für eine Reinigung benötigte Zeiten sehr kurz sein sollen, damit die Extrusionsanlage nicht zu lange außer Betrieb zu sein hat und in dieser Zeit unproduktiv ist, hat sich die Fachwelt immer bemüht, einfache, aber wirkungsvolle Abdichtsysteme zu entwickeln, die einen schnellen Ein- und Ausbau der Lochscheibe ermöglichen. Das ist bisher nur in unzureichendem Maße gelungen.

Aus der US 3,632,279 ist eine Dichtung bekannt geworden, bei der eine Lochscheibe in einem mehrteiligen Gehäuse durch einen ringförmigen, aus Stahl bestehenden Einsatz abgestützt wird. Dieser ringförmige Einsatz ist auf der dem Extruder abgewandten Seite der Lochplatte angeordnet und dient nicht der Abdichtung des Hochdruckbereiches vor der Lochscheibe gegenüber dem umgebenden Raum. Die Abdichtung des Hochdruckbereiches vor der Lochscheibe erfolgt allein durch Anpressung der Lochscheibe gegen den Extruderzylinder. Diese Abdichtung wird um so schlechter, je höher der Druck vor der Lochscheibe ist. Reichen die Kräfte des Anpressens der Lochscheibe gegen den Extruderzylinder nicht mehr aus, tritt Extrudat seitlich der Lochscheibe in den Raum zwischen den Maschinenteilen aus.

Aus der US 3,833,247 ist ebenfalls eine Abdichtung einer Lochscheibe in einer Extrusionsanlage durch einen Dichtring bekannt geworden, bei der der Dichtring ebenfalls nur direkt den Bereich hinter der Lochscheibe abdichtet. Die Abdichtung der Lochscheibe im Hochdruckbereich erfolgt ebenfalls allein durch den Anpressdruck der Lochscheibe gegen den Zylinder des Extruders. Mit steigendem Extrusionsdruck vor der Lochscheibe wird diese Abdichtung schlechter, seitlich um den Lochscheibenrand herum austretendes Material gelangt in den Zwischenraum zwischen die Gehäuseteile und kann austreten.

Die Erfindung vermeidet die Nachteile des Standes der Technik.

Es ist die Aufgabe der Erfindung, mit einfachen Mitteln eine hervorragend gute Abdichtung der Lochscheibe in ihrem Gehäuse zu schaffen, deren Bauteile einen schnellen Wechsel der Lochscheibe sowie eine schnelle Reinigung des Lochscheibensitzes ermöglichen.

Diese Aufgabe wird erfindungsgemäß durch die Vorrichtung nach Anspruch 1 gelöst.

Zweckmäßige Weiterbildungen der Erfindung sind Gegenstand der abhängigen Ansprüche.

Die Erfindung besteht darin, dass der am Ort der Abdichtung keilförmig zulaufende Dichtring an seiner Spitze sowohl gegen die Lochscheibe als auch gegen das der Extrusionsanlage zugenwandte Gehäuse so gedrückt ist, dass er sich unter elastischer Verformung seiner Spitze an diese Maschinenteile so fest anlegt, dass keinerlei Spalt mehr verbleibt, wodurch mit steigendem Druckgefälle zwischen den Räumen vor und hinter der Lochscheibe die Anpressung an den Dichtstellen steigt so dass dieser Dichtring mindestens zwei ringförmige Dichtungen erzielt, die eine an der Gehäuseinnenfläche, des der Extrusionsanlage zugenwandten Gehaüses die andere an der Schrägfläche der Lochscheibe.

Hierbei wird die hervorragende Abdichtung dadurch erzielt, dass der am Ort der Abdichtung keilförmig zulaufende Ring an seiner Spitze sowohl gegen die Lochscheibe als auch gegen das Gehäuse so gedrückt wird, dass er sich unter elastischer Verformung seiner Spitze and diese Maschinenteile so fest anlegt, dass keinerlei Spalt mehr verbleibt, durch den sich bei den sehr hohen Drücken an dieser Stelle Extrudat durch die Kontaktstellen dieser Maschinenteile hindurchquetschen könnte und dass mit steigendem Druckgefälle zwischen den Räumen vor und hinter der Lochscheibe die Anpressung an den Dichtstellen ebenfalls steigt und dadurch eine betriebslastabhängige Dichtwirkung erzeugt wird. Da es nur ein einziger Ring ist, der die Abdichtung gleich zweier ringförmiger Kantaktstellen bewirkt, geht der Ausbau und Einbau der Lochplatte leicht und schnell vonstatten.

Da die Spitze des Dichtringes bei den hohen Preßdrucken einem Verschleiß unterliegen kann, kann es zweckmäßig sein, daß der Dichtring an seinem nach außen spitz zulaufenden Ende abgegratet ist oder eine schmale Ringfläche aufweist, welche in einer Ebene senkrecht zur Achse liegt oder eine leicht konische Schrägfläche aufweist.

Ein besonders geeignetes Material für die Herstellung des Dichtringes ist Federstahl, der ausreichende elastische Eigenschaften bei hoher Festigkeit aufweist.

Bei einem Gehäuse, das aus zwei schalenförmigen Teilen aufgebaut ist und bei dem die Trennlinie zwischen den beiden Teilen in einer Ebene parallel oder durch die Lochscheibe verläuft, ist es vorteilhaft, wenn die beiden Gehäuseteile Mittel zum Abstützen der Lochscheibe einerseits und des Dichtringes andererseits tragen. Dann erfolgt die Abdichtung selbsttätig beim Zusammenbau der beiden Gehäuseteile, nämlich dann, wenn diese beiden Gehäuseteile für den Betrieb miteinander verspannt werden.

Bei einem solchen zweiteiligen Gehäuse ist es vorteilhaft, wenn beide Gehäuseteile auf den einander zugekehrten Seiten einen Absatz tragen, wobei die Lochscheibe mit ihrer der Extrusionsanlage zugekehrten äußeren Umfangskante an dem Absatz des der Extrusionsanlage zugewandten Gehäuseteiles anliegt, während der Dichtring mit seiner seiner Schrägfläche abgewandten Seite an dem Absatz des anderen Gehäuseteiles anliegt.

Für diese gegenseitige Verspannung weisen die beiden Gehäuseteile neben dem sie voneinander trennenden Spalt Vorsprünge auf, an denen Arbeitsmittel angreifen, die die beiden Gehäuseteile zusammenpressen. Dabei sind die die beiden Gehäuseteile zusammenpressenden Arbeitsmittel z.B.Flansche, Klemmschellen, Bajonettverschlüsse oder Klappschrauben.

Diese Lochscheibenanordnung kann mit Vorteil auch dort zum Einsatz kommen, wo an den Ausgang des Gehäuses eine weitere Extrusionsanlage angeschlossen ist.

Das Wesen der Erfindung ist nachstehend anhand eines Ausführungsbeispieles näher erläutert. Es zeigen:
- Fig.1: einen Schnitt durch ein Lochplattengehäuse mit Lochplatte und Dichtring,

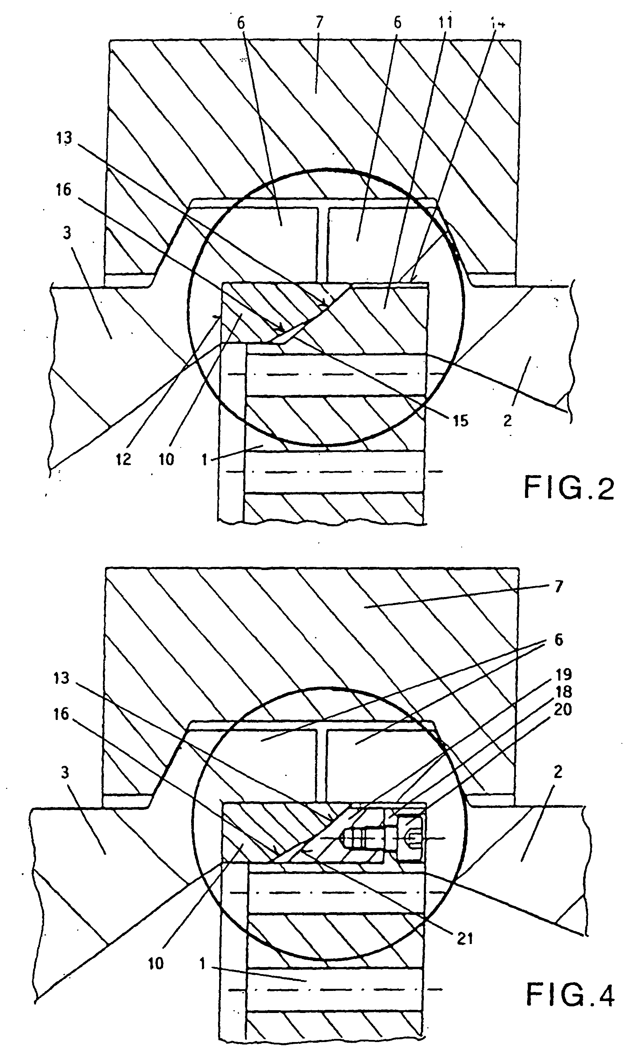

- Fig.2: die durch einen Kreis markierte Einzelheit der Fig.1 in Vergrößerung,
- Fig.3: einen Schnitt durch ein Lochplattengehäuse mit einer Lochplatte mit Bundring und einer anderen Abdichtung mit zwei Ringen,
- Fig.4: die durch einen Kreis markierte Einzelheit der Fig.3 in Vergrößerung,
- Fig.5: einen Schnitt durch ein anderes Lochplattengehäuse mit einer Lochplatte und einer anderen Abdichtung mit zwei Ringen,

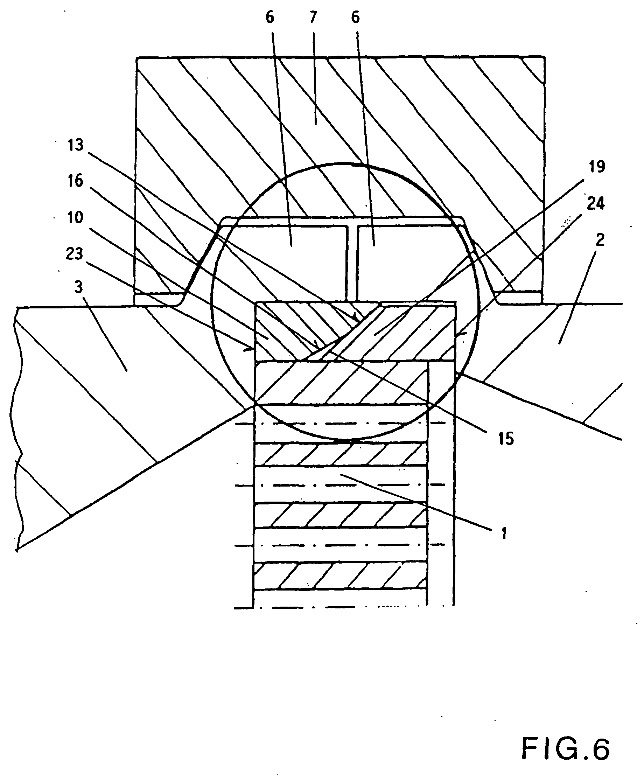

- Fig.6: die durch einen Kreis markierte Einzelheit der Fig.1 in Vergrößerung.

Das die Lochplatte 1 aufnehmende Gehäuse besteht aus zwei mit einander zu verspannenden Gehäuseteilen 2,3, von denen das Gehäuseteil 2 mit dem Flansch 4 an die nicht dargestellte Extrusionsanlage angebaut ist, während an das Gehäuseteil 3 eine ebenfalls nicht dargestellte Ausformvorrichtung, z.B. ein Spritzkopf, eine Ausformleiste o.dgl., oder eine weitere Extrusionsanlage für den weiteren Aufschluß des zu plastifizierenden Materials mittels des Flansches 5 angebracht ist.

Zwischen diesen beiden Gehäuseteilen 2,3 ist die Lochplatte 1 eingespannt. Die beiden Gehäuseteile 2,3 weisen an den einander zugekehrten Seiten Vorsprünge 6 auf, die von Spannklammern 7 überfaßt und mit einer Vorspannkraft zusammengepreßt werden.

In ihrem Inneren weisen die beiden Gehäuseteile 2,3 zur Festlegung der Lochscheibe 1 je einen ringförmigen Absatz 8,9 auf. An dem ringförmigen Absatz 8 im Gehäuseteil 2 liegt die Lochscheibe 1 mit ihrem stirnseitigen Rand an. An dem ringförmigen Absatz 9 des Gehäuseteiles 3 liegt ein Dichtring 10 mit seiner Rückseite an. Diese Rückseite des Dichtringes 10 liegt in einer Ebene senkrecht zur Achse 17, während die vordere Stirnseite durch eine (doppelte) Konusfläche 13,16 (unterschiedlicher Neigungswinkel) gebildet ist.

Am Umfang der Lochplatte 1 ist ein ringförmiger Vorsprung 11 mit konischer Dichtfläche 15 vorgesehen. Die Lochplatte 1 weist daher an ihrer der Extrusionsanlage zugewandten Seite einen größeren Durchmesser als an ihrer dem Ausgang zugewandten Seite auf.

Der durch die Außenfläche des Dichtringes 10 und durch seine Konusfläche 13,16 des Dichtringes 10 gebildete Ringkeil schiebt sich beim Zusammenbau zwischen die Innenfläche des Vorsprunges 6 am Gehäuseteil 2 und die konische Dichtfläche 15 am ringförmigen Vorsprung 11 am Umfang der Lochscheibe 1.Beim Zusammenklammern und gegenseitigen Verspannen der beiden Gehäuseteile 2,3 wird der Dichtring 10 mit seiner konischen Stirnfläche 13,16 in den Spalt zwischen dem Umfang der Lochplatte 1 und dem Gehäuseteil 2 eingepreßt.

Zur Erzielung der Dichtheit zwischen der Lochplatte 1 und dem Gehäuseteil 2 wirken am Umfang der Lochplatte 1 der ringförmige Vorsprung 11 mit konischer Dichtfläche 15 mit dem mit seiner ebenen Rückseite 12 an dem Absatz 9 des Gehäuseteiles 3 anliegenden Dichtring 10 zusammen, der auf seiner Vorderseite die konische Fläche 13,16 aufweist, welche im Betrieb der Anlage an der konischen Fläche 15 am Umfang der Lochscheibe 1 anliegt.

Beim Zusammenbau der beiden Gehäuseteile 2,3 bewirken die beiden konischen Flächen 15 und 13,16, daß der aus elastischem Stahl gefertigte Dichtring 10 unter dem Preßdruck, mit dem die beiden Gehäuseteile 2,3 zusammengeklammert werden, nicht nur dichtend an dem konischen ringförmigen Vorsprung 11 der Lochscheibe 1 mit seiner konischen Fläche 13 dichtend anliegt, sondern unter der Vorspannkraft auch aufgeweitet wird und daher auch an der Gehäuseinnenfläche 14 dichtend anliegt. Außerdem verstärkt ein zunehmendes Druckgefälle zwischen den Räumen vor und hinter der Lochscheibe die Preßkraft zwischen Lochscheibe und Dichtring und damit die Dichtwirkung an der konischen Innenseite und an der zylindrischen Außenseite des Dichtringes.

Somit ist der ganze (in Strömungsrichtung gesehen) vor der Lochscheibe 1 befindliche Innenraum des Gehäuseteiles 1, in welchem sich ein sehr hoher Extrudatdruck während des Betriebes aufbaut, abgedichtet, wobei ein einziger Dichtring 10 zwei Abdichtungsfunktionen übernimmt, nämlich eine Abdichtung der Lochscheibe 1 gegen den Dichtring 10 und eine Abdichtung des Gehäuses 2 gegen den Dichtring 10.

An dem Dichtring 10 ist die ringförmige Spitze zwischen der konischen Fläche 13 und der zylindrischen Außenfläche des Dichtringes 10 verschleißgefährdet. Um diesen Verschleiß zu verhindern kann man die Spitze brechen und durch eine ebene Fläche ersetzen, die parallel zur Rückseitenfläche 12 verläuft.

Der Dichtring 10 weist auf seiner der Dichtfläche 15 der Lochscheibe 1 zugewandten Seite eine weitere konische Fläche 16 auf, die einen anderen Winkel mit der Achse 17 einschließt, derart, daß die Dichtflächen am äußeren Umfang gegeneinander anliegen.

Mit einem einzigen Dichtring werden somit zwei ringförmige Dichtungen erzielt:
1. Konische Fläche 13 am Dichtring 10 -/- konische Fläche 15 an der Lochscheibe 1
2. Umfangsfläche des Dichtringes 10 -/- Innenfläche des Gehäusevorsprunges 6 am Gehäuseteil 2.

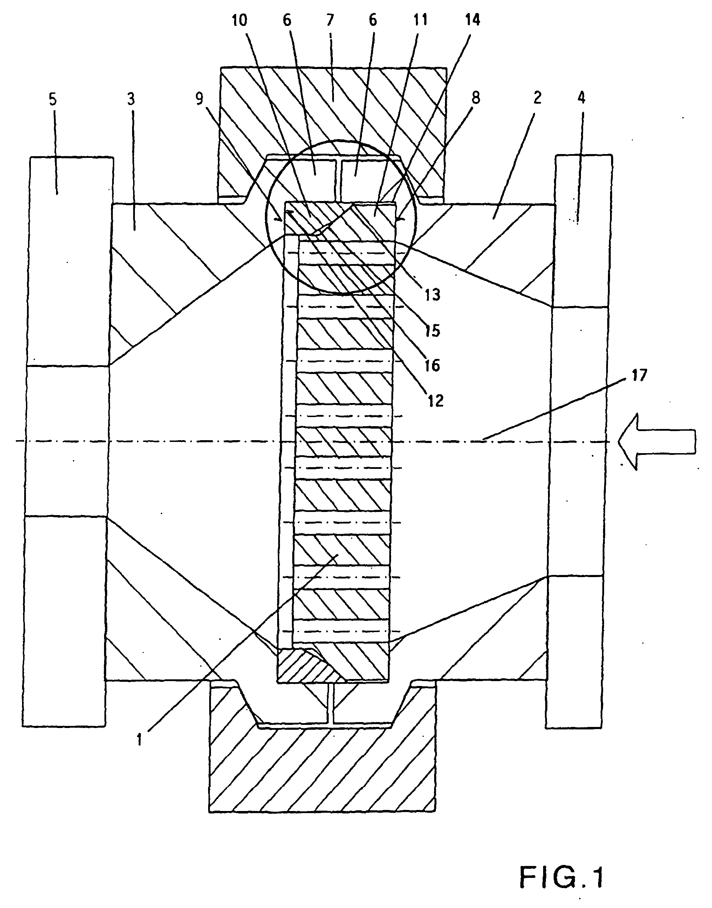

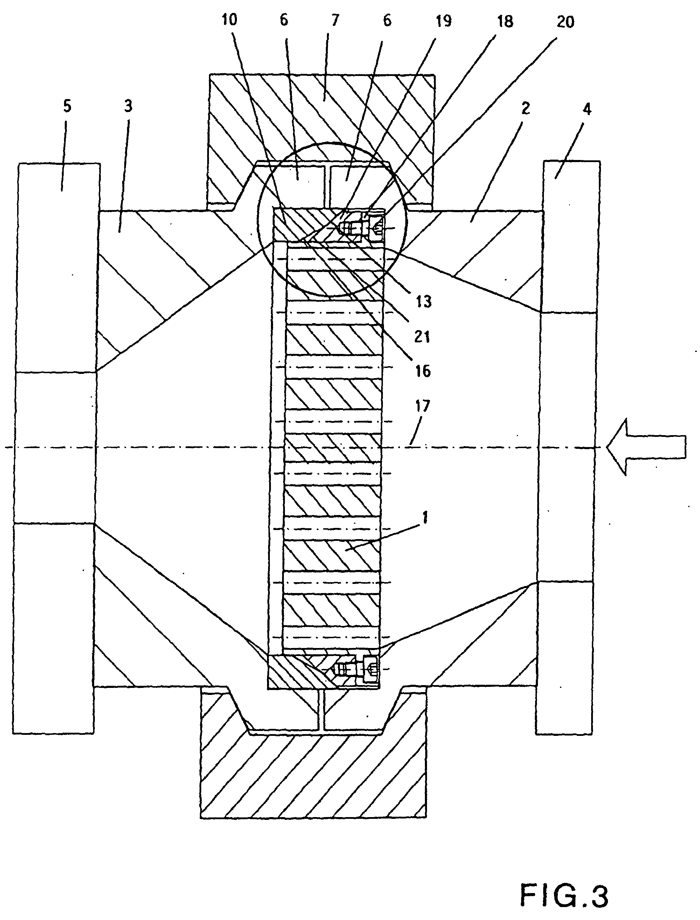

Wie Fig.3 zeigt, kann die Lochscheibe 1 auch mit einem Bundring 18 versehen sein, an dem ein Stützring 19 mittels Schrauben 20 befestigt ist. Dieser Stützring 19 liegt am Bundring 18 mit einer ebenen Stirnfläche an und weist auf der dem Bundring 18 abgekehrten Seite eine konische Dichtfläche 21 auf, die der Dichtfläche 15 in Fig.1 entspricht. Dieser Stützring 19 arbeitet mit einem Dichtring 10 zusammen, welcher auf seiner dem Stützring 19 zugewandten Stirnseite eine konische Fläche 13,16 aufweist, die einen anderen Winkel mit der Achse 17 einschließt, derart, daß die Dichtflächen 13,21 sich am äußeren Umfang gegeneinander anlegen.

Es besteht hier auch die bereits in Fig.1 gezeigte Möglichkeit, die Dichtfläche am Dichtring 10 in einem mittleren Bereich gebrochen auszuführen, so daß sie aus zwei an ihren einander zugekehrten Rändern ineinander übergehenden Kegelstumpfflächen 13,16 besteht.

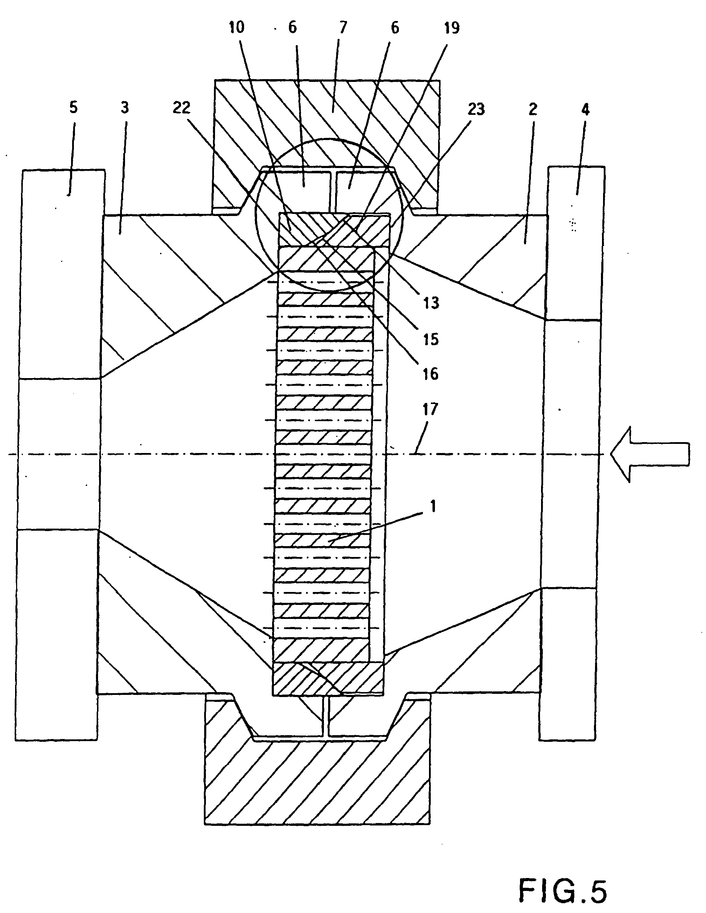

In Fig.5 ist eine weitere Ausführungsform der Abdichtung gezeigt: Auch hier wird die Abdichtung mit einem Paar von stirnseitig konischen Ringen, dem Dichtring 10 und dem Stützring 19 erzielt, die gegeneinander gerichtete Kegelstumpfflächen 13,16 und 15 haben, die sich am äußeren Umfang berühren. Wichtig ist bei dieser Art der Abdichtung, daß der eine Stützring 19 allein an dem Gehäuseteil 2 anliegt, der Rand der Lochscheibe 1 jedoch nicht, während am Gehäuseteil 3 sowohl der Dichtring 10 als auch die Lochscheibe 1 mit ihrem äußeren Rand anliegen. Deshalb ist hier am Gehäuseteil 3 eine breite Anlagefläche 22 vorgesehen, während die Anlagefläche 23 am Gehäuseteil 2 schmaler ist.

Bei dieser Art der Abdichtung der Fig.3 und 5 gibt es drei ringförmige Dichtstellen:
1. Äußerer Umfang des Dichtringes 10 -/- Innenfläche des Vorsprunges 6.
2. Konische Fläche 15 des Stützringes 19 -/- konische Fläche 13 des Dichtringes 10.
3. Innenfläche des Stützringes 19 -/- äußere Umfangsfläche der Lochscheibe 1

Will man die Lochplatte 1 zum gleichzeitigen Ausformen einer Vielzahl von Strängen der Querschnittsform der Löcher der Lochscheibe 1 benutzen, z. B. bei der Herstellung von Granulat, läßt man den geschlossenen Gehäuseteil 3 entfallen und ersetzt ihn durch einen Preßring, der auf die Rückseite 12 des Dichtringes 10 wirkt, oder eine überwurfmutter.

### Liste der Bezugszeichen

- 1: Lochplatte
- 2: Gehäuseteil
- 3: Gehäuseteil
- 4: Flansch
- 5: Flansch
- 6: Vorsprung
- 7: Spannklammer
- 8: ringförmiger Absatz
- 9: ringförmiger Absatz
- 10: Dichtring
- 11: ringförmiger Vorsprung
- 12: Rückseite des Dichtringes
- 13: konische Fläche am Dichtring
- 14: Gehäuseinnenfläche
- 15: konische Dichtfläche an der Lochscheibe
- 16: konische Fläche
- 17: Achse
- 18: Bundring
- 19: Stützring
- 20: Schraube
- 21: konische Dichtfläche an der Lochscheibe
- 22: Anlagefläche am Gehäuseteil 3
- 23: Anlagefläche am Gehäuseteil 2

## Patentansprüche

1. Vorrichtung zur Abdichtung einer Lochscheibe (1) in einer Extrusionsanlage für Kautschukmischungen oder Kunststoffe, bestehend aus einem zumindest zweiteiligen, an den Ausgang der Extrusionsanlage angebauten Gehäuse (2,3), in welchem die Lochscheibe (1) axial gegen einen ringförmigen Absatz (8) gepresst ist, an ihrem äußeren Umfang mit einem Absatz in Form einer Schrägfläche (11) versehen ist
und an ihrem Umfang mittels eines Dichtringes (10) abgedichtet gelagert ist,
wobei Mittel (6,7) zum Anpressen des Dichtringes (10) an die Schrägfläche (15) der Lochscheibe (1) vorgesehen sind, und
wobei die eine auf die Schrägfläche (15) an der Lochscheibe (1) gerichtete Stirnseite des Dichtringes (10) ebenfalls als Schrägfläche (13,16) mit einem ähnlichen oder gleichen Neigungswinkel und gleicher Neigungsrichtung wie die Schrägfläche (15) an der Lochscheibe (1) ausgebildet ist,
**dadurch gekennzeichnet,**
**dass** der am Ort der Abdichtung keilförmig zulaufende Dichtring (10) an seiner Spitze sowohl gegen die Lochscheibe (1) als auch gegen das der Extrusionsanlage zugewandte Gehäuse (2) so gedrückt ist, dass er sich unter elastischer Verformung seiner Spitze an diese Maschinenteile so fest anlegt, dass keinerlei Spalt mehr verbleibt,
wodurch mit steigendem Druckgefälle zwischen den Räumen vor und hinter der Lochscheibe (1) die Anpressung an den Dichtstellen steigt,
so dass dieser Dichtring (10) mindestens zwei ringförmige Dichtungen erzielt, die eine an der Gehäuseinnenfläche (14) des der Extrusionsanlage zugewandten Gehäuses (2), die andere an der Schrägfläche (13) der Lochscheibe (1).

2. Vorrichtung nach Anspruch 1
**dadurch gekennzeichnet,**
**daß** der Dichtring (10) aus einem in gewissen Grenzen elastisch verformbaren Metall besteht, vorzugsweise aus Federstahl.

3. Vorrichtung nach Anspruch 1
**dadurch gekennzeichnet,**
**daß** das Gehäuse aus mindestens zwei Teilen (2,3) aufgebaut ist und die Trennlinie in einer Ebene parallel zu oder durch die Lochscheibe (1) verläuft,
**daß** die beiden Gehäuseteile (2,3) Mittel zum Abstützen der Lochscheibe (1) einerseits und des Dichtringes (10) andererseits tragen.

4. Vorrichtung nach Anspruch 1
**dadurch gekennzeichnet,**
**daß** beide Gehäuseteile (2,3) auf den einander zugekehrten Seiten je einen Absatz (8,9) tragen,
wobei die Lochscheibe (1) mit ihrer der Extrusionsanlage zugekehrten äußeren Umfangskante an dem Absatz (8) des der Extrusionsanlage zugewandten Gehäuseteiles (2) anliegt,
während der Dichtring (10) mit seiner Schrägfläche (11) abgewandten Seite an dem dem Absatz (9) des anderen Gehäuseteiles (3) anliegt.

5. Vorrichtung nach Anspruch 3
**dadurch gekennzeichnet,**
**daß** die beiden Gehäuseteile (2,3) neben dem sie voneinander trennenden Spalt Vorsprünge (6) aufweisen, an denen Arbeitsmittel angreifen, die die beiden Gehäuseteile (2,3) zusammenpressen.

6. Vorrichtung nach Anspruch 5
**dadurch gekennzeichnet,**
**daß** die die beiden Gehäuseteile (2,3) zusammenpressenden Arbeitsmittel Flansche, Klemmschellen (7), Bajonettverschlüsse oder Klappschrauben sind.

7. Vorrichtung nach Anspruch 1
**dadurch gekennzeichnet,**
**daß** die Lochscheibe (1) eine Stütze für ein Sieb ist.

8. Vorrichtung nach Anspruch 1
**dadurch gekennzeichnet,**
**daß** an den Ausgang des Gehäuses (2,3) der Extrusionsanlage eine weitere Extrusionsanlage angeschlossen ist.

9. Vorrichtung nach Anspruch 1
**dadurch gekennzeichnet,**
**daß** die Lochscheibe (1) an ihrem äußeren Rand einen Bundring (18) trägt und mit diesem zwei Ringe (den Stützring 19 und den Dichtring10) gegeneinander drückt, die jeder eine konische Stirnfläche (13,21) aufweisen, die einander zugekehrt sind und sich am äußeren Rand berühren.

10. Vorrichtung nach Anspruch 1
**dadurch gekennzeichnet,**
**daß** die Lochscheibe (1) allein von hinten durch eine Anlage an einem Gehäuseteil (3) sowie durch zwei am äußeren Umfang anliegende Ringe (den Stützring 19 und den Dichtring10) gehaltert ist, die jeder eine konische Stirnfläche (13,21) aufweisen, die einander zugekehrt sind und sich am äußeren Rand berühren.

11. Vorrichtung nach Anspruch 1
**dadurch gekennzeichnet,**
**daß** die konische Stirnfläche des Dichtringes (10) gebrochen ist und diese Fläche zwei mit unterschiedlichem Winkel verlaufende Teile (13,16) aufweist.

## Claims

1. Device for sealing a perforated disc (1) in an extruder for rubber mixtures or plastics materials, consisting of an at least two-part housing (2, 3) built onto the output of the extruder and in which the perforated disc (1) is pressed axially against an annular shoulder (8) and at its outer periphery is provided with a shoulder in the form of an oblique face (11) and is mounted in a sealed manner at its periphery by means of a sealing ring (10), wherein means (6, 7) are provided for pressing the sealing ring (10) onto the oblique face (15) of the perforated disc (1), and wherein the one end face of the sealing ring (10) directed towards the oblique face (15) on the perforated disc (1) is also designed as an oblique face (13, 16) with a similar or the same angle of inclination and the same direction of inclination as the oblique face (15) on the perforated disc (1), **characterised in that** the sealing ring (10), extending in a wedge shape at the site of the seal, at its point is pressed both against the perforated disc (1) and against the housing (2) facing the extruder, such that it rests, with elastic deformation of its point, so rigidly against these machine parts that no gap of any kind remains, so that with increasing pressure gradients between the spaces in front of and behind the perforated disc (1), the contact pressure increases at the sealing points, so the sealing ring (10) produces at least two annular seals, one at the inner housing face (14) of the housing (2) facing the extruder, the other at the oblique face (13) of the perforated disc (1).

2. Device according to claim 1, **characterised in that** the sealing ring (10) consists of a metal which can be elastically deformed within certain limits, preferably of spring steel.

3. Device according to claim 1, **characterised in that** the housing is constructed from at least two parts (2, 3) and the dividing line extends in a plane parallel to or through the perforated disc (1), **in that** the two housing parts (2, 3) carry means for supporting the perforated disc (1) on the one hand and the sealing ring (10) on the other hand.

4. Device according to claim 1, **characterised in that** the two housing parts (2, 3) each carry a shoulder (8, 9) on the sides facing one another, the perforated disc (1) resting with its outer peripheral edge facing the extruder on the shoulder (8) of the housing part (2) facing the extruder, while the sealing ring (10) rests with its side remote from the oblique face (11) on the shoulder (9) of the other housing part (3).

5. Device according to claim 3, **characterised in that** the two housing parts (2, 3), next to the gap separating them from one another, have projections (6) on which operating means act which press the two housing parts (2, 3) together.

6. Device according to claim 5, **characterised in that** the operating means pressing the two housing parts (2, 3) together are flanges, collar bands (7), bayonet catches or hasp screws.

7. Device according to claim 1, **characterised in that** the perforated disc (1) is a support for a screen.

8. Device according to claim 1, **characterised in that** a further extruder is connected to the output of the housing (2, 3) of the extruder.

9. Device according to claim 1, **characterised in that** the perforated disc (1) at its outer edge carries a Hoop ring (18) and with it presses two rings (the support ring (19) and the sealing ring (10)) against one another, each having a conical end face (13, 21) facing one another and touching one another at the outer edge.

10. Device according to claim 1, **characterised in that** the perforated disc (1) is held only from the rear by abutment on a housing part (3) and by two rings (the support ring (19) and the sealing ring (10)) resting on the outer periphery, having a conical end face (13, 21) facing one another and touching one another at the outer edge.

11. Device according to claim 1, **characterised in that** the conical end face of the sealing ring (10) is broken and this face has two parts (13, 16) extending at a different angle.

## Revendications

1. Dispositif pour l'étanchement d'un disque perforé (1) dans un appareil d'extrusion pour des mélanges de caoutchouc ou des plastiques, comprenant un boîtier (2, 3) au moins en deux parties, rapporté à la sortie de l'appareil d'extrusion, dans lequel le disque perforé (1) est pressé axialement contre un décrochement (8) annulaire, est pourvu sur son pourtour extérieur d'un décrochement sous la forme d'une surface inclinée (11)
et est logé de façon étanche sur son pourtour au moyen d'une bague d'étanchéité (10),
des moyens (6, 7) pour presser la bague d'étanchéité (10) sur la surface inclinée (15) du disque perforé (1) étant prévus et
le côté avant, dirigé vers la surface inclinée (15) sur le disque perforé, de la bague d'étanchéité (10) étant conçu également comme surface inclinée (13, 16) avec un angle d'inclinaison similaire ou identique et un sens d'inclinaison identique à la surface inclinée (15) sur le disque perforé (1),
**caractérisé en ce que**
la bague d'étanchéité (10) arrivant en forme de clavette à l'endroit de l'étanchéité est appuyée sur son extrémité aussi bien contre le disque perforé (1) que contre le boîtier (2) tourné vers l'appareil d'extrusion de telle sorte qu'elle s'appuie sur ces parties de machine, sous l'effet de la déformation élastique de son extrémité, si fermement qu'il ne reste plus de fente,
moyennant quoi la pression sur les points d'étanchéité augmentant avec la chute de pression croissante entre les espaces disposés devant et derrière le disque perforé (1),
de sorte que cette bague d'étanchéité (10) reçoit au moins deux joints annulaires, l'un sur la surface intérieure du boîtier (14) du boîtier (2) tourné vers l'appareil d'extrusion, l'autre sur la surface inclinée (13) du disque perforé (1).

2. Dispositif selon la revendication 1, **caractérisé en ce que** la bague d'étanchéité (10) est à base d'un métal élastiquement déformable dans certaines limites, de préférence à base d'acier à ressort.

3. Dispositif selon la revendication 1, **caractérisé en ce que** le boîtier est conçu à base d'au moins deux parties (2, 3) et la ligne de séparation est agencée dans un plan parallèlement au disque perforé (1) ou à travers le disque perforé (1) , **en ce que** les deux parties de boîtier (2, 3) portent des moyens pour l'appui du disque perforé (1) d'une part et de la bague d'étanchéité (10) d'autre part.

4. Dispositif selon la revendication 1, **caractérisé en ce que** les deux parties de boîtier (2, 3) portent sur chacun des côtés tournés l'un vers l'autre un décrochement (8, 9), le disque perforé (1) s'appuyant avec son bord périphérique extérieur tourné vers l'appareil d'extrusion sur le décrochement (8) de la partie de boîtier (2) tournée vers l'appareil d'extrusion, alors que la bague d'étanchéité (10) s'appuie avec le côté opposé à sa surface inclinée (11) sur le décrochement (9) de l'autre partie de boîtier (3) .

5. Dispositif selon la revendication 3, **caractérisé en ce que** les deux parties de boîtier (2, 3) présentent à côté de la fente qui les sépare des parties saillantes (6) sur lesquelles s'appliquent des moyens de travail qui resserrent les deux parties de boîtier (2, 3).

6. Dispositif selon la revendication 5, **caractérisé en ce que** les moyens de travail resserrant les deux parties de boîtier (2, 3) sont des brides, des colliers de serrage (7), des fermetures à baïonnette ou des boulons à charnière.

7. Dispositif selon la revendication 1, **caractérisé en ce que** le disque perforé (1) est un support pour un tamis.

8. Dispositif selon la revendication 1, **caractérisé en ce qu'**un autre appareil d'extrusion est raccordé à la sortie du boîtier (2, 3) de l'appareil d'extrusion.

9. Dispositif selon la revendication 1, **caractérisé en ce que** le disque perforé (1) porte une bague collerette (18) sur son bord extérieur et appuie avec celle-ci deux bagues (la bague d'appui 19 et la bague d'étanchéité 10) l'une contre l'autre, lesquelles présentent chacune une surface avant (13, 21) conique, qui sont tournées l'une vers l'autre et se touchent sur le bord extérieur.

10. Dispositif selon la revendication 1, **caractérisé en ce que** le disque perforé (1) est maintenu seulement par l'arrière par un appui sur une partie de boîtier (3) ainsi que par deux bagues (la bague de support 19 et la bague d'étanchéité 10) s'appuyant sur le pourtour extérieur, lesquelles présentent chacune une surface avant (13, 21) conique, qui sont tournées l'une vers l'autre et se touchent sur le bord extérieur.

11. dispositif selon la revendication 1, **caractérisé en ce que** la surface avant conique de la bague d'étanchéité (10) est cassée et cette surface présente deux parties (13, 16) agencées avec un angle différent.
